(19) Europäisches Patentamt
European Patent Office
Office européen des brevets

(11) Publication number: **0 570 931 A2**

# (12) EUROPEAN PATENT APPLICATION

(21) Application number: **93108143.4**

(22) Date of filing: **19.05.93**

(51) Int. Cl.5: **C08F 12/12**, C08F 4/645, C08L 25/04, C08F 12/08

(30) Priority: **21.05.92 JP 128595/92**
**22.05.92 JP 154131/92**

(43) Date of publication of application:
**24.11.93 Bulletin 93/47**

(84) Designated Contracting States:
**AT BE CH DE ES FR GB IT LI NL SE**

(71) Applicant: **IDEMITSU KOSAN COMPANY LIMITED**
**1-1, Marunouchi 3-chome**
**Chiyoda-ku**
**Tokyo(JP)**

(72) Inventor: **Machida, Shuji, c/o Idemitsu Kosan Co., Ltd.**
**1280, Kamiizumi**
**Sodegaura-shi, Chiba-ken(JP)**
Inventor: **Tani, Noriyuki, c/o Idemitsu Kosan Co., Ltd.**
**1280, Kamiizumi**
**Sodegaura-shi, Chiba-ken(JP)**
Inventor: **Tazaki, Toshinori, c/o Idemitsu Kosan Co., Ltd.**
**1280, Kamiizumi**
**Sodegaura-shi, Chiba-ken(JP)**

(74) Representative: **Türk, Gille, Hrabal, Leifert**
**Brucknerstrasse 20**
**D-40593 Düsseldorf (DE)**

## (54) Styrenic polymer, process for producing same and multi-layer material comprising same.

(57) There are disclosed a styrenic polymer of highly syndiotactic configuration which has a functional group at a ceasing terminal of a styrenic monomer, and a reduced viscosity of 0.01 to 20 dl/g (0.05 g/dl in 1,2,4-trichlorobenzene at 135°C); a multi-layer material comprising at least one layer composed of the above styrenic polymer; a multi-layer material comprising at least one layer composed of a resin composition containing (A) the above styrenic polymer and (B) at least one member selected from a thermoplastic resin, an inorganic filler and an organic filler; and a process for producing the above styrenic polymer which comprises polymerising a styrenic monomer in the presence of a specific catalyst and subjecting the resultant polymer to terminal-functionalizing treatment. The above-disclosed styrenic polymer is markedly improved in compatibility and adhesiveness and is expected to find a wide range of applications requiring adhesiveness with metals, etc.

FIG. 1

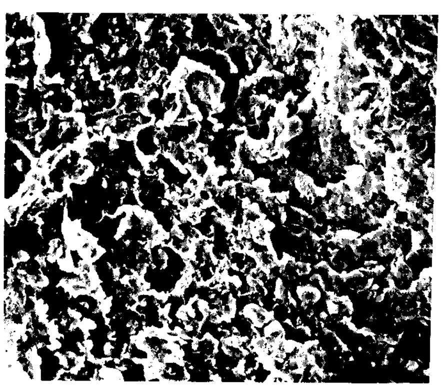

EP 0 570 931 A2

## BACKGROUND OF THE INVENTION

### 1. Field of the Invention

The present invention relates to a novel styrenic polymer, a process for producing the same and a multi-layer material comprising the same. More particularly, it pertains to a terminal-functionalized styrenic polymer which has a high degree of syndiotactic configuration, preserves the crystalline property as one of the characteristics of a syndiotactic polystyrene and is provided with capabilities of compatibility and adhesiveness; a process for efficiently producing said styrenic polymer; and a multi-layer material comprising a resin composition which is produced by compositing said styrenic polymer and an other material without losing the advantages inherent in said styrenic polymer such as resistance to solvents, hydrolysis, heat, hot water and the like and also is well suited for use in automobiles parts, electronic and electrical appliances and parts and packaging materials.

### 2. Description of Related Art

Heretofore, styrenic polymers produced by the radical polymerization method have been molded to various shapes by various molding methods and widely used as domestic electrical appliances, office machines, household goods, packaging containers, toys, furnitures, synthetic papers and other industrial materials. Because of their atactic configuration in stereochemical structure, however, such styrenic polymers have suffered the disadvantages of inferior heat resistance and chemical resistance.

In order to solve the above-mentioned disadvantages of the styrenic polymers having atactic configuration, the group of the present inventors succeeded in the development of the styrenic polymers having a high degree of syndiotactic configuration, and further a syndiotactic styrenic polymer formed by copolymerizing styrene monomer with an other monomer (refer to Japanese Patent Application Laid-Open Nos. 104818/1987, 187708/1987 and 241009/1988).

The above-developed syndiotactic polymers are excellent in heat resistance, chemical resistance and electrical properties, and are expected to find new applications in a variety of fields.

However the above-mentioned syndiotactic polystyrene suffers the disadvantage that it is not sufficient in interfacial adhesivity and compatibility with an other type of resin and is almost devoid of adhesivity to a metal, thereby limiting the production of a high-performance resin by compositing with an other type of resin.

On the other hand, a polyolefinic resin such as polyethylene and polypropylene is excellent in mechanical and electrical properties and is widely utilized as various moldings, but suffers the drawback in that it is not sufficient in heat resistance as compared with an engineering plastics or the like.

Being generally a condensation-type high molecular polymer, an engineering plastics is excellent in mechanical properties and heat resistance, but has a high dielectric constant due to a polar group contained therein in many cases, making itself unfavorable in the use as an electronic material. In addition, it suffers the defect that it requires drying prior to molding because of its hygroscopicity and is liable to change due to moisture absorption after molding. In view of the above, if it is made possible to composite the above-mentioned high molecular material with the syndiotactic polystyrene, still further application of the materials will be made feasible.

There is known the copolymers of an unsaturated carboxylic acid ester and a syndiotactic polystyrene. (Refer to Japanese Patent Application Laid Open Nos. 7705/1991, 185619/1992 and 298512/1992). Although a highly crystalline copolymer is obtained by the aforesaid process in the case of a low content of the monomer, a high content thereof results in the formation of an amorphous polymer, thus failing to make full use of the mechanical, thermal and chemical characteristics of the syndiotactic polystyrene. The aforesaid process, therefore, suffers the disadvantage that the amount of the copolymerizable monomer is limited for the purpose of maintaining a high degree of syndiotacticity, which makes it impossible to obtain in a wide range the materials provided with the characteristics of the syndiotactic polystyrene by compositing with an other thermoplastic resin or a filler.

The use of a resin compatibilizer as the third component is taken into consideration, but an appropriate resin compatibilizer can not be found because of the high molding temperature of the syndiotactic polystyrene and further, the use thereof unfavorably causes the possibility of bringing about the deterioration of the resin composition to be produced.

Under such circumstances, intensive research and investigation were made by the present inventors for the purpose of developing and providing a styrenic polymer which has a high degree of syndiotactic configuration, preserves the crystalline property inherent in the styrenic polymer of syndiotactic configuration and is provided with capabilities of compatibilities and adhesiveness; and at the same time, a high performance resin composition produced by compositing said styrenic polymer and other material without losing the advantages inherent in said styrenic polymer such as resistance to solvents, hydrolysis, heat, hot water and the like; and a multi-layer material comprising the resin composition thus obtained.

As a result, it has been found by the present inventors that the above-mentioned purpose is attained by the application of a styrenic polymer of a high degree of syndiotactic configuration having a functional group at a terminal thereof and a reduced viscosity within a prescribed range and a resin composition comprising the aforesaid styrenic polymer, a thermoplastic resin and an inorganic filler or an organic filler. The present invention has been accomplished on the basis of the above-mentioned finding and information.

## SUMMARY OF THE INVENTION

In order to attain the above-mentioned purpose, the present invention provides a styrenic polymer which has a functional group at a ceasing terminal of the structural unit represented by the general formula (I)

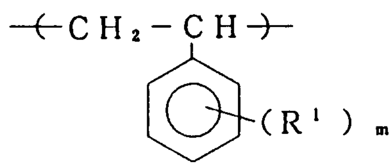

(I)

wherein $R^1$ is a hydrogen atom, a halogen atom or a substituent having at least one atom selected from carbon, tin and silicon and may form a condensed ring together with a benzene ring, m is an integer from 1 to 5 and when m is 2 or more, each $R^1$ may be the same or different, said styrenic polymer having a reduced viscosity of 0.01 to 20 dl/g as measured at a concentration of 0.05 g/dl in 1,2,4-trichlorobenzene at 135 °C, the stereoregularity of the main chain consisting of said structural unit being of highly syndiotactic.

The present invention further provides a multi-layer material comprising at least one layer consisting of said styrenic polymer.

The present invention further provides a resin composition comprising said styrenic polymer and at least one member selected from a thermoplastic resin, an inorganic filler and an organic filler.

The present invention still further provides a process for producing the above-mentioned styrenic polymer which comprises polymerizing a styrenic monomer represented by the general formula (II)

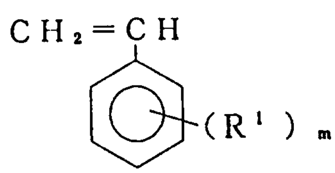

(II)

wherein $R^1$ and m are each as previously defined, in the presence of a catalyst comprising as principal components (1) (a) a transition metal compound and (b) an aluminoxane; or (2) (a) a transitional metal compound and (c) a compound capable of reacting with said transition metal compound to form an ionic complex, to substantially form a polymer and subsequently reacting said polymer with a compound seelcted from a compound having a halogen atom or an active hydrogen atom and a substituent containing at least one atom selected from oxygen, nitrogen, sulfur, phosphorus and a halogen, carbon dioxide and carbon disulfide.

## BRIEF DESCRIPTION OF THE DRAWINGS

Fig. 1 is an enlarged sectional view showing the compatible state of the resin composition obtained in Example 10.

Fig. 2 is an enlarged sectional view showing the compatible state of the resin composition obtained in Example 11.

Fig. 3 is an enlarged sectional view showing the compatible state of the resin composition obtained in Example 12.

Fig. 4 is an enlarged sectional view showing the compatible state of the resin composition obtained in Example 13.

Fig. 5 is an enlarged sectional view showing the compatible state of the resin composition obtained in Example 14.

Fig. 6 is an enlarged sectional view showing the compatible state of the resin composition obtained in Comparative Example 1.

Fig. 7 is an enlarged sectional view showing the compatible state of the resin composition obtained in Comparative Example 2.

Fig. 8 is an enlarged sectional view showing the compatible state of the resin composition obtained in Comparative Example 3.

Fig. 9 is an enlarged sectional view showing the compatible state of the resin composition obtained in Comparative Example 3.

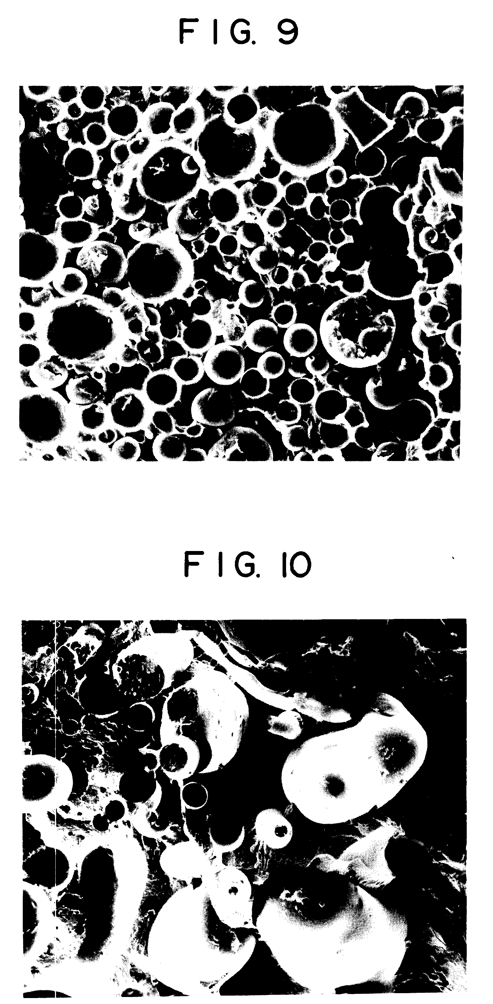

Fig. 9 is an enlarged sectional view showing the compatible state of the resin composition obtained in Comparative Example 4.

Fig. 10 is an enlarged sectional view showing the compatible state of the resin composition obtained in Comparative Example 5.

DESCRIPTION OF PREFERRED EMBODIMENT

Specific examples of the styrenic monomers represented by the general formula (II) to be used as the starting raw material of the styrenic polymer of the present invention include alkylstyrene such as styrene, p-methylstyrene, o-methylstyrene, m-methylstyrene, 2,4-dimethylstyrene, 2,5-dimethylstyrene, 3,4-dimethylstyrene, 3,5-dimethylstyrene, and p-tert-butylstyrene; halogenated styrene such as p-chlorostyrene, m-chlorostyrene, o-chlorostyrene, p-bromostyrene, m-bromostyrene, o-bromostyrene, p-fluorostyrene, m-fluorostyrene, o-fluorostyrene and o-methyl-p-fluorostyrene; vinylbiphenyls such as 4-vinylbiphenyl, 3-vinylbiphenyl and 2-vinylbiphenyl; vinylphenylnaphthalenes such as 1-(4-vinylphenyl)naphthalene, 2-(4-vinylphenyl)naphthalene, 1-(3-vinylphenyl)naphthalene, 2-(3-vinylphenyl)naphthalene, 1-(2-vinylphenyl)-naphthalene and 2-(2-vinylphenyl)naphthalene; vinylphenylanthracenes such as 1-(4-vinylphenyl)anthracene, 2-(4-vinylphenyl)anthracene, 9-(4-vinylphenyl)anthracene, 1-(3-vinylphenyl)anthracene, 2-(3-vinylphenyl)-anthracene, 9-(3-vinylphenyl)anthracene, 1-(2-vinylphenyl)anthracene, 2-(2-vinylphenyl)anthracene and 9-(2-vinylphenyl)anthracene, vinylphenylphenanthrene such as 1-(4-vinylphenyl)phenanthrene, 2-(4-vinylphenyl)-phenanthrene, 3-(4-vinylphenyl)phenanthrene, 4-(4-vinylphenyl)phenanthrene, 9-(4-vinylphenyl)-phenanthrene, 1-(3-vinylphenyl)phenanthrene, 2-(3-vinylphenyl)phenanthrene, 3-(3-vinylphenyl)-phenanthrene, 4-(3-vinylphenyl)phenanthrene, 9-(3-vinylphenyl)phenanthrene, 1-(2-vinylphenyl)-phenanthrene, 2-(2-vinylphenyl)phenanthrene, 3-(2-vinylphenyl)phenanthrene, 4-(2-vinylphenyl)phenanthrene and 9-(2-vinylphenyl)phenanthrene, vinylphenylpyrenes such as 1-(4-vinylphenyl)pyrene, 2-(4-vinylphenyl)-pyrene, 1-(3-vinylphenyl)pyrene, 2-(3-vinylphenyl)pyrene, 1-(2-vinylphenyl)pyrene and 2-(2-vinylphenyl)-pyrene; vinylterphenyls such as 4-vinyl-p-terphenyl, 4-vinyl-m-terphenyl, 4-vinyl-o-terphenyl, 3-vinyl-p-terphenyl, 3-vinyl-m-terphenyl, 3-vinyl-o-terphenyl, 2-vinyl-p-terphenyl, 2-vinyl-m-terphenyl and 2-vinyl-o-terphenyl; vinylphenylterphenyls such as 4-(4-vinylphenyl)-p-terphenyl; vinylalkylbiphenyls such as 4-vinyl-4'-methylbiphenyl, 4-vinyl-3'-methylbiphenyl, 4-vinyl-2'-methylbiphenyl, 2-methyl-4-vinylbiphenyl and 3-methyl-4-vinylbiphenyl; halogenated vinylbiphenyls such as 4-vinyl-4'-fluorobiphenyl, 4-vinyl-3'-fluorobiphenyl, 4-vinyl-2'-fluorobiphenyl, 4-vinyl-2-fluorobiphenyl, 4-vinyl-3-fluorobiphenyl, 4-vinyl-4'-chlorobiphenyl, 4-vinyl-3'-chlorobiphenyl, 4-vinyl-2'-chlorobiphenyl, 4-vinyl-2-chlorobiphenyl, 4-vinyl-3-chlorobiphenyl, 4-vinyl-4'-bromobiphenyl, 4-vinyl-3'-bromobiphenyl, 4-vinyl-2'-bromobiphenyl, 4-vinyl-2-bromobiphenyl and 4-vinyl-3-bromobiphenyl; trialkylsilylvinylbiphenyls such as 4-vinyl-4'-trimethylsilylbiphenyl; trialkylstannylvinylbiphenyls such as 4-vinyl-4'-trimethylstannylbiphenyl and 4-vinyl-4'-tributylstannylbiphenyl; trialkylsilylmethylvinylbiphenyls such as 4-vinyl-4'-trimethylsilylmethylbiphenyl; trialkylstannylmethylvinylbiphenyls such as 4-vinyl-4'-trimethylstannylmethylbiphenyl and 4-vinyl-4'-tributylstannylmethylbiphenyl; halogen-substituted alkylstyrene such as p-chloroethylstyrene, m-chloroethylstyrene and o-chloroethylstyrene; alkylsilylstyrene such as p-trimethylsilylstyrene, m-trimethylsilylstyrene, o-trimethylsilylstyrene, p-triethylsilylstyrene, m-triethylsilylstyrene, o-triethylsilylstyrene and p-dimethyl-tert-butylsilylstyrene; phenyl group-containing silylstyrene such as p-dimethylphenylsilylstyrene, p-methyldiphenylsilylstyrene and p-triphenylsilylstyrene; halogen-containing silylstyrene such as p-dimethylchlorosilylstyrene, p-methyldichlorosilylstyrene, p-trichlorosilylstyrene, p-dimethylbromosilylstyrene and p-dimethyliodosilylstyrene; silyl group-containing silylstyrene such as p-(p-trimethylsilyl)dimethylsilylstyrene. The styrenic monomer may be used alone or in combination with at least one other styrenic monomer.

In the production of the styrenic polymer of the present invention, there is employed a catalyst comprising as principal components (1) (a) a transition metal compound and (b) an aluminoxane; or (2) (a) a transition metal compound and (c) a compound capable of reacting with a transiton metal compound to form an ionic complex.

Various transition metal compounds are available as the component (a) and exemplified by the compounds represented by the general formula (III)

$M^1R^2$ --- $R^k$ (III)

wherein $M^1$ is Ti, Zr, Cr, V, Nb, Ta or Hf atom; $R^2$ to $R^k$ are each a hydrogen atom, an oxygen atom, a halogen atom, an alkyl group having 1 to 20 carbon atoms, an alkoxy group having 1 to 20 carbon atoms, an aryl group, an alkylaryl group or an arylalkyl group each having 6 to 20 carbon atoms, an acyloxy group having 1 to 20 carbon atoms, an allyl group, a substituted allyl group, an acetylacetonato group, a substituted acetylacetonato group, a substituent containing silicon atom, a ligand such as a carbonyl, an oxygen molecule, a nitrogen molecule, a Lewis base, an unsaturated chain hydrocarbon or unsaturated cyclic hydrocarbon, cyclopentadienyl group, substituted cyclopentadienyl group, indenyl group, substituted indenyl group tetrahydroindenyl group, substituted tetrahydroindenyl group, fluorenyl group or substituted fluorenyl group; and k is the valency of the metal, that is, usually an integer of 2 to 5; and the ligands in $R^2$ to $R^k$ may form a crosslinked structure among them by covalent bond.

Examples of the substituted cyclopentadienyl group in the above-mentioned formula (III) include methylcyclopentadienyl group; ethylcyclopentadienyl group; isopropylcyclopentadienyl group; 1,2-dimethylcyclopentadienyl group; tetramethylcyclopentadienyl group; 1,3-dimethylcyclopentadienyl group; 1,2,3-trimethylcyclopentadienyl group; 1,2,4-trimethylcyclopentadienyl group; pentamethylcyclopentadienyl group and trimethylsilylcyclopentadienyl group. Specific examples of $R^2$ to $R^k$ include F, Cl, Br and I as halogen atom; methyl, ethyl, n-propyl, isopropyl, n-butyl, octyl and 2-ethylhexyl group as alkyl group having 1 to 20 carbon atoms; methoxy, ethoxy, propoxy, butoxy and phenoxy group as alkoxy group having 1 to 20 carbon atoms; phenyl, tolyl, xylyl and benzyl group as aryl, alkylaryl or arylalkyl group each having 6 to 20 carbon atoms; heptadecylcarbonyloxy group as acyloxy group having 1 to 20 carbon atoms; trimethylsilyl and (trimethylsilyl)methyl group as substituent containing silicon atom; as Lewis base, ethers such as dimethyl ether, diethyl ether and tetrahydrofuran; thioethers such as tetrahydrothiophene; esters such as ethylbenzoate; nitriles such as acetonitrile and benzonitrile; amines such as trimethylamine, triethylamine, tributylamine, N,N-dimethylaniline, pyridine, 2,2'-bipyridine and phenanthroline; phosphine such as triethylphosphine and triphenylphosphine; unsaturated chain hydrocarbon such as ethylene, butandiene, 1-pentene, isoprene, pentadiene, 1-hexene and derivatives thereof; unsaturated cyclic hydrocarbon such as benzene, toluene, xylene, cycloheptatriene, cyclooctadiene, cyclooctatriene, cyclooctatetraene and derivatives thereof. Examples of crosslinkage by covalent bond include methylene, dimethylmethylene, ethylene, dimethylsilylene, dimethylgermylene and dimethylstannylene crosslinkage.

Among the transition metal compounds represented by the general formula (III), specific examples of titanium compounds include tetramethoxytitanium, tetraethoxytitanium, tetra-n-butoxytitanium, tetraisopropoxytitanium, titanium, tetrachloride, titanium trichloride, titanium dichloride, titanium hydride, cyclopetnadienyltrimethyltitanium, dimethoxytitanium dichloride, methoxytitanium trichloride, trimethoxytitanium chloride, cyclopentadienyltriethyltitanium, cyclopetnadienyltripropyltitanum, cyclopentadientyltributyltitanum, methylcyclopentadienyltrimethyltitanium, 1,2-dimethylcyclopentadientyltrimethyltitanium, pentamethylcyclopentadienyltrimethyltitanium, pentamethylcyclopentadienyltriethyltitanium, pentamethylcyclopentadienyltripropyltitanium, pentamethylcyclopentadienyltributyltitanium, cyclopentadienylmethyltitanium dichloride, pentamethylcyclopentadienylmethyltitanium dichloride, cyclopentadienyldimethyltitanium monochloride, cyclopentadienyldiethyltitanium monochloride, cyclopentadienyltitanium trimethoxide, cyclopentadienyltitanium triethoxide, cyclopentadienyltitanium tripropoxide, cyclopentadienyltitanium triphenoxide, pentamethylcyclopentadienyltitanium trimethoxide, pentamethylcyclopentadienyltitanium triethoxide, pentamethylcyclopentadienyltitanium tripropoxide, pentamethylcyclopentadienyltitanium tributoxide, pentamethylcyclopentadienyltitanium triphenoxide, cyclopentadienyltitanium trichloride, pentamethylcyclopentadienyltitanium trichloride, cyclopentadienylmethoxytitanium dichloride, cyclopentadienyldimethoxytitanium chloride, pentamethylcyclopentadienylmethoxytitanium dichloride, cyclopentadienyltribenzyltitanium, pentamethylcyclopentadienylmethyldiethoxytitanium, indenyltitanium trichloride, indenyltitanium trimethoxide, indenyltitanium triethoxide, indenyltrimethyltitanium, indenyltribenzyltitanium, and the like.

Among the transition metal compounds represented by the general formula (III), specific examples of zirconium compound ($M^1$ = Zr) include dicyclopentadienylzirconium dichloride, tetrabutoxyzirconium, zirconium tetrachloride, tetraphenylzirconium, cyclopentadienylzirconium trimethoxide, pentamethylcyclopentadienylzirconium trimethoxide, cyclopentadienyltribenzylzirconium, pentamethylcyclopentadienyltribenzylzirconium, bis(indenyl)zirconium dichloride, dibenzylzirconium dichloride, tetrabenzylzirconium, tributoxyzirconium chloride, triisopropoxyzirconium chloride, pentamethylcyclopentadienyltrimethylzirconium, pentamethylcyclopentadienyltriphenylzirconium, pentamethylcyclopentadienyltrichlorozirconium, cyclopentadienyltrimethylzirconium, cyclopentadienyltriphenylzirconium, cyclopentadienyltrichlorozirconium, cyclopentadienyldimethylmethoxyzirconium, methylcyclopentadienyltrimethylzirconium, methylcyclopentadienyltriphenylzirconium, methylcyclopentadienyltribenzylzirconium, methylcyclopentadienyltrichlorozirconium, methylcyclopentadienyldimethylmethoxyzirconium, dimethylcyclopentadienyltrichlorozirconium, trimethylcyclopentadienyltrichlorozirconium, trimethylsilylcyclopentadienyltrimethylzirconium, tetramethylcyclopentadienyltrichlorozirconium, bis(cyclopentadienyl)-dimethylzirconium, bis(cyclopentadienyl)diphenylzirconium, bis(cyclopentadienyl)diethylzirconium, bis-(cyclopentadienyl)dibenzylzirconium, bis(cyclopentadienyl)dimethoxyzirconium, bis(cyclopentadienyl)-dichlorozirconium, bis(cyclopentadienyl)dihydridezirconium, bis(cyclopentadienyl)-monochloromonohydridezirconium, bis(methylcyclopentadienyl)dimethylzirconium, bis-(methylcyclopentadienyl)dichlorozirconium, bis(methylcyclopentadienyl)dibenzylzirconium, bis-(pentamethylcyclopentadienyl)dimethylzirconium, bis(pentamethylcyclopentadienyl)dichlorozirconium, bis-(pentamethylcyclopentadienyl)dibenzylzirconium, bis(pentamethylcyclopentadienyl)chloromethylzirconium, bis(pentamethylcyclopentadienyl)hydridemethylzirconium, (cyclopentadienyl)(pentamethylcyclopentadienyl) dichlorozirconium, ethylenebis(indenyl)dimethylzirconium, ethylenebis(tetrahydroindenyl)dimethylzirconium, ethylenebis(tetrahydroindenyl)dichlorozirconium, dimethylsilylenebis(cyclopentadienyl)dimethylzirconium, dimethylsilylenebis(cyclopentadienyl)dichlorozirconium, isopropyl(cyclopentadienyl)(9-fluorenyl)-dimethylzirconium, isopropyl(cyclopentadienyl)(9-fluorenyl)dichlorozirconium, phenyl(methyl)methylene (9-fluorenyl)(cyclopentadienyl)dimethylzirconium,diphenylmethylene(cyclopentadienyl)(9-fluorenyl)-dimethylzirconium, ethylidene(9-fluorenyl)(cyclopentadienyl)dimethylzirconium, cyclohexyl(9-fluorenyl)-(cyclopentadienyl)dimethylzirconium, cyclobenzyl(9-fluorenyl)(cyclopentadienyl)dimethylzirconium, cyclobutyl(9-fluorenyl)(cyclopentadienyl)dimethylzirconium, dimethylsilylene(9-fluorenyl)-(cyclopentadienyl)-dimethylzirconium, dimethylsilylenebis(2,3,5-trimethylcyclopentadienyl)dichlorozirconium, dimethylsilylenebis(2,3,5-trimethylcyclopentadienyl)dimethylzirconium.

Specific examples of hafnium compounds include cyclopentadienylhafnium trimethoxide, pentamethylcyclopentadienylhafnium trimethoxide, cyclopentadienyltribenzylhafnium, pentamethylcyclopentadienyltribenzylhafnium, bisindenylhafnium dichloride, dibenzylhafnium dichloride, tetrabenzylhafnium, tributoxyhafnium chloride, triisopropoxyhafnium chloride, hafnium tetrachloride, dicyclopentadienylhafnium dichloride and tetraethoxyhafnium.

Specific examples vanadium compounds include vanadium trichloride, vanadyl trichloride, vanadium triacetylacetonato, vanadium tetrachloride, vanadium tributoxide, vanadyl dichloride, vanadyl bisacetylacetonato, vanadyl triacetylacetonato, dibenzenevanadium, dicyclopentadienylvanadium, dicyclopentadienylvanadium dichloride, cyclopentadienylvanadium dichloride and cyclopentadienylmethylvanadium.

Specific examples of niobium compounds include niobium pentachloride, tetrachloromethylniobium, dichlorotrimethylniobium, dicyclopentadienylniobium dichloride, dicyclopentadienylniobium trihydride, and pentabutoxyniobium.

Specific examples of tantalum compounds include tantalum pentachloride, dichlorortrimethyltantalum, dicyclopentadienyltantalum trihydride and pentabutoxytantalum.

Specific examples of chrominum compounds include chrominum trichloride, tetrabutoxychronium, tetramethylchrominum, dicyclopentadienylchloromium and dibenzenechrominum.

As the other transition metal compounds there may be employed the above-mentioned transition compounds each supported on a carrier such as a magnesium compound or a silicon compound and those each modified with an electron donative compound.

Among the above-mentioned transition metal compounds are particularly desirable the titanium compounds and the zirconium compounds.

As a component of the catalyst (1) in the present invention, an aluminoxnae (b) is employed together with the transition metal compound (a). The aluminoxane is obtained by bringing an organoaluminum compound into contact with a condensation agent, and includes a chain aluminoxane represented by the general formula (IV)

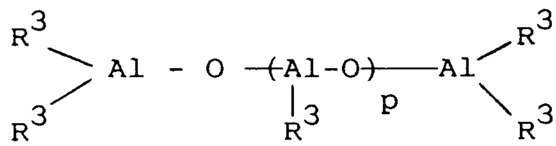 ...(IV)

wherein $R^3$ is alkyl group having 1 to 20 carbon atoms, is preferably a methyl group and p is a number from 0 to 50, preferably 5 to 30; and a cyclic aluminoxane represented by the general formula (V)

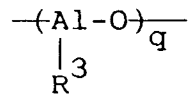 ...(V)

wherein $R^3$ is as previously defined and q is a number from 2 to 50, preferably 5 to 30.

The organoaluminum compound is exemplified by a trialkylaluminum such as trimethylaluminum, triethylaluminum and triisobutylaluminum, of which is preferable trimethylaluminum.

The condensation agent is typified by water and exemplified by an arbitrary substance which undergoes condensation reaction with a trialkylaluminum such as copper sulphate pentahydrate, water adosorbed in an inorganic or organic substance and so forth.

In general, the contact product of an organoaluminum compounds such as trialkylaluminum and water contains the above-mentioned chain alkylaluminoxane and cyclic alkylaluminoxane together with unreacted trialkylaluminum, various mixture of condensates and further the molecules resulting from association in an intricate manner thereof. Accordingly, the resultant contact product varies widely depending upon the conditions of contact of trialkylaluminum with water as the condensation agent.

The reaction of the alkylaluminum compound and water is not specifically limited in the above case and may be effected according to the publicly known methods, which are exemplified by (1) a method in which an organoaluminum compound is dissolved in an organic solvent an then brought into contact with water, (2) a method in which an organoaluminum compound is first added to the reaction system at the time of polymerization and thereafter water is added thereto, and (3) a method in which an organoaluminum compound is reacted with the water of crystallization contained in metal salts and the like, or the water adsorbed in inorganic or organic materials. The above-mentioned water may contain up to about 20% of ammonia, amine such as ethylamine, sulfur compound such as hydrogen sulfide, phosphorus compound such as phosphite, or the like. The above-mentioned reaction proceeds even in the absence of a solvent but is preferably carried out in a solvent. Examples of the suitable solvent to be used here include aliphatic hydrocarbons such as hexane, heptane and decane, aromatic hydrocarbons such as benzene, toluene and xylene, and the like. The aluminoxane (e.g. an alkylaluminoxane) is preferably obtained by a method wherein the solid residue produced after contact reaction in the case of a water-containing compound being used is removed by means of filtration and the filtrate is heat treated under atmospheric or reduced pressure at 30 to 200°C, preferably 40 to 150°C for 20 minutes to 8 hours, preferably 30 minutes to 5 hours while distilling away the solvent used.

The temperature in the aforementioned heat treatment may be pertiently determined according to the various conditions, but should be usually within the above-described ranage. The temperature lower than 30°C fails to bring about the prescribed effect, whereas that exceeding 200°C causes thermal decomposition of aluminoxane itself, each resulting in unfavorable consequence.

The reaction product is obtained in the form of colorless solid or solution depending upon the heat treatment conditions, and can be used as the catalyst solution by dissolving in or diluting with a hydrocarbon solvent according to the demand.

Suitable examples of the aluminoxane, that is, the contact product of organoaluminum compound and a condensation agent which is used as the component of the catalyst, especially an alkylaluminoxane are those in which the area of the high magnetic field component in the methyl proton signal region due to the aluminum-methyl group (Al-$CH_3$) bond as observed by the proton nuclear magnetic resonance method is not more than 50% of the total signal area. That is, in a proton nuclear magnetic resonance ($^1$H-NMR) spectral analysis of the alkylaluminoxane in toluene solvent at room temperature, the methyl proton signal due to Al-$CH_3$ is observed in the region of 1.0 to -0.5 ppm (tetramethylsilane (TMS) standard). Since the proton siganl of TMS (0 ppm) is in the region of the methyl proton siganl due to Al-$CH_3$, the methyl proton signal due to Al-$CH_3$ is measured with 2.35 ppm methyl proton signal of toluene in TMS standard. The

methyl proton signal due to Al-$CH_3$ is divided into two comonents: the high magnetic field component in the -0.1 to -0.5 ppm region and the other magnetic field component in the 1.0 to -0.1 ppm region. In alkylaluminoxane preferably used as component (B) of the catalyst in the present invention, the area of the high magnetic field component is not more than 50%, preferably 45 to 5% of the total signal area in the 1.0 to -0.5 ppm region.

As a component of the catalyst (2) in the present invention, there is employed (c) a compound capable of reacting with a transition metal compound to form an ionic complex together with the (a) transition metal compound. The (c) compound is not specifically limited, but there is preferably used a compound comprising a cation and an anion in which a plurality of radicals are bonded to an element, specifically a compound comprising a cation having a element selected from the groups of IIIB, VB, VIB, VIIB, VIIIB, IA, IB, IIA, IIB, IVA and VIIA of the Periodic Tabel and an anion in which a plurality of radicals are bonded to an element selected from the groups of VB, VIB, VIIB, VIII, IB, IIB, IIIA, IVA and VA of the Periodic Table, especially a coordination complex compound comprising the cation and the anion in which a plurality of radicals are bonded to the element. The (c) compound is exemplified by the compound represented by the general formula (VI) or (VII).

$$([L^1\text{-}R^4]^{u+})_v([M^2Z^1Z^2\text{---}Z^e]^{(e-f)-})_w \qquad (VI)$$

$$([L^2]^{u+})_v([M^3Z^1Z^2\text{---}Z^e]^{(e-f)-})_w \qquad (VII)$$

wherein $L^2$ is $M^4$, $R^5R^6M^5$ or $R^7{}_3C$ or $R^8M^5$; $L^1$ is a Lewis base; $M^2$ and $M^3$ are each an element selected from Groups VB, VIB, VIIB, VIII, IB, IIB, IIIA, IVA and VA of the Periodic Table; $M^4$ and $M^5$ are each an element selected from Groups IIIB, IV, V, VIB, VIIB, VIII, I, IB, IIA, IIB and VIIA of the Periodic Table; $Z^1$ to $Z^e$ are each a hydrogen atom, a dialkylamino group, an alkoxy group having 1 to 20 carbon atoms, an aryloxy group having 6 to 20 carbon atoms, an alkyl group having 1 to 20 carbon atoms, an aryl group having 6 to 20 carbon atoms, an alkylaryl group, an arylalkyl group, a halogen-substituted hydrocarbon radical having 1 to 20 carbon atoms, an acyloxy group having 1 to 20 carbon atoms, an organometalloid group or a halogen atom and at least two of them may combine with each other to form a ring; $R^4$ is a hydrogen atom, an alkyl group having 1 to 20 carbon atoms, an aryl group having 6 to 20 carbon atoms, an alkylaryl group or an arylalkyl group; $R^5$ and $R^6$ are each a cyclopentadienyl group, a substituted cyclopentadienyl group, an indenyl group or a fluorenyl group; $R^7$ is an alkyl group having 1 to 20 carbon atoms, an aryl group, an alkylaryl group or an arylalkyl group; $R^8$ is a macrocyclic ligand such as tetraphenylporphyrin and phthalocyanine; f is the valency of each of $M^2$ and $M^3$, indicating an integer of 1 to 7; e is an integer of 2 to 8; u is the ion valency of each of $[L^1\text{-}R^4]$ and $[L^2]$, indicating an integer of 1 to 7; v is an integer of 1 or more; and $w = (v \times u)/(e - f)$.

Specific examples of the Lewis base represented by $L^1$ include amines such as ammonia, methylamine, aniline, dimethylamine, diethylamine, N-methylaniline, diphenylamine, trimethylamine, triethylamine, tri-n-butylamine, N,N-dimethylaniline, methyldiphenylamine, pyridine, 2,2-bipyridine, p-bromo-N,N'-dimethylaniline, p-nitro-N,N-dimethylaniline and phenanthroline; phosphines such as triethylphosphine, triphenylphosphine and diphenylphosphine; ethers such as dimethylether, diethyl ether, tetrahydrofuran dioxane; thioethers such as diethyl thioether and tetrahydrothiophene; esters such as ethylbenzoate; and nitriles such as acetonitrile and benzonitrile.

Specific exmamples of $M^2$ and $M^3$ include B, Al, Si, P, As, Sb, etc.; those of $M^4$ include Li, Na, Ag, Cu, Br, I, $I_3$, etc.; and those of $M^5$ include Mn, Fe, Co, Ni, Zn, etc. Specific examples of $Z^1$ to $Z^e$ include dialkylamino group such as dimethylamino and diehtylamino, alkoxy group having 1 to 20 carbon atoms such as methoxy, ethoxy and n-butoxy; aryloxy group having 6 to 20 carbon atoms such as phenoxy, 2,6-dimethylphenoxy and naphthyloxy; alkyl group having 1 to 20 carbon atoms such as methyl, ethyl, n-propyl, iso-propyl, n-butyl, n-octyl and 2-ethylhexyl; aryl group having 6 to 20 carbon atos, alkylaryl group or arylalkyl group such as phenyl, p-tolyl, benzyl, pentafluorophenyl, 3,5-di(trifluoromethyl)phenyl, 4-tert-butylphenyl, 2,6-dimethylphenyl, 3,5-dimethylphenyl, 2,4-dimethylphenyl, 2,3-dimethylphenyl and 1,2-dimethylphenyl; halogen-substituted hydrocarbon radical having 1 to 20 carbon atoms include p-fluorophenyl, 3,5-difluorophenyl, pentachlorophenyl, 3,4,5-trifluorophenyl, pentafluorophenyl and 3,5-di-(trifluoromethyl)phenyl; halogen atoms such as F, Cl, Br and I and organometalloid group such as pentamethylantimony group, trimethylsilyl group, trimethylgermyl group, diphenylarsine group, dicyciohexylanitimony group and diphenylboron group. Specific examples of $R^4$ and $R^7$ are as previously enumerated. Specific examples of substitued cyclopentadienyl gorup in $R^5$ and $R^6$ include alkyl group-substituted cyclopentadienyl group such as methylcyclopentadienyl, butylcyclopentadienyl and pentamethylcyclopentadienyl, where the alkyl group has usually 1 to 6 carbon atoms and the number of the substituted alkyl

groups are selected from the integers of 1 to 4.

The compound represented by the general formula (VI) or (VII) is preferably the compound in which $M^2$ or $M^3$ is boron, and enumerated, as preferably usable one of the general formula (VI) by triethylammonium tetraphenylborate, tri(n-butyl)ammonium tetraphenylborate, trimethylammonium tetraphenylborate, tetraethylammonium tetraphenylborate, methyltri(n-butyl)ammonium tetraphenylbroate, benzyltri(n-butyl)-ammonium tetraphenylborate, dimethyldiphenylammonium tetraphenylborate, methyltriphenylammonium tetraphenylborate, trimethylanilinium tetraphenylborate, methylpyridinium tetraphenylborate, benzylpyridinium tetraphenylborate, methyl(2-cyanopyridinium) tetraphenylborate, trimethylsulfonium tetraphenylborate, benzylmethylsulfonium tetraphenylborate, triehtylammonium tetra(pentafluorophenyl)borate, triphenylammonium tetra(pentafluorophenyl)borate, tetrabutylammonium tetra(pentafluorophenyl)borate, tetraethylammonium tetra(pentafluorophenyl)borate, methyltri(n-butyl)ammonium tetra(pentafluorophenyl)-borate, benzyltri(n-butyl)ammonium tetra(pentafluorophenyl)borate, methyldiphenylammonium tetra-(pentafluorophenyl)borate, methyltriphenylammonium tetra(pentafluorophenyl)borate, dimethyldiphenylammonium tetra(pentafluorophenyl)borate, anilinium tetra(pentafluorophenyl)borate, methylanilinium tetra-(pentafluorophenyl)borate, dimethylanilinium tetra(pentafluorophenyl)borate, trimethylanilinium tetra-(pentafluorophenyl)borate, dimethyl(m-nitroanilinium) tetra(pentafluorophenyl)borate, dimethyl(p-bromoanilinium) tetra(pentafluorophenyl)borate, pyridinium tetra(pentafluorophenyl)borate, p-cyanopyridinium tetra(pentafluorophenyl)borate, N-methylpyridinium tetra(pentafluorophenyl)borate, N-benzylpyridinium tetra(pentafluorophenyl)borate, o-cyano-N-methylpyridinium tetra(pentafluorophenyl)borate, p-cyano-N-methylpyridinium tetra(pentafluorophenyl)borate, p-cyano-N-benzylpyridinium tetra-(pentafluorophenyl)borate, trimethylsulfonium tetra(pentafluorophenyl)borate, benzyldimethylsulfonium tetra-(pentafluorophenyl)borate, teraphenylphosphonium tetra(pentafluorophenyl)borate, dimethylanilinium tetra-(3,5-di-trifluoromethylphenyl)borate and triethylammonium hexafluoroarsenate.

Examples of the compound of the general formula (VII) include ferrocenium tetraphenylborate, silver tetraphenylborate, trityl tetraphenylborate, (tetraphenylporphyrin manganate) tetraphenylborate, ferrocenium tetra(pentafluorophenyl)borate, decamethylferrocenium tetra(pentafluorophenyl)borate, acetylferrocenium tetra(pentafluorophenyl)borate, formylferrocenium tetra(pentafluorophenyl)borate, cyanoferrocenium tetra-(pentafluorophenyl)borate, silver tetra(pentafluorophenyl)borate, trityl tetra(pentafluorophenyl)borate, lithium tetra(pentafluorophenyl)borate, sodium tetra(pentafluorophenyl)borate, (tetraphenylporphyrin manganate) tetra(pentafluorophenyl)borate, (tetraphenylporpyrinium chloride) tetra(pentafluorophenyl)borate, (tetraphenylporphyrin zincate) tetra(pentafluorophenyl)borate, silver tetrafluoroborate, silver hexafluoroarsenate and silver hexafluoroantimonate.

As the compound other than that represented by the general formula (VI) or (VII), there are usable, for example, tri(pentafluorophenyl)boron, tri[3,5-di(trifluoromethyl)phenyl]boron and triphenylboron.

In the present invention, an organometallic compound as component (d) may be employed, as desired, in combination with the above-described catalyst (1) or (2), and is represented by the general formula (VIII)

$M^6(R^9)_r$ (VIII)

where $R^9$ is an alkyl group having 1 to 20 carbon atoms, an alkenyl group having 2 to 20 carbon atoms, a cycloalkyl group having 3 to 20 carbon atoms, an aryl group having 6 to 20 carbon atoms or aralkyl group having 7 to 20 carbon atoms, and is specifically exemplified by methyl group, ethyl group, n-propyl group, isopropyl group, n-butyl group, isobutyl group, hexyl group, 2-ethylhexyl group and phenyl group; $M^6$ is lithium, sodium, potassium, magnesium, zinc, cadminum, aluminum, boron, gallium, silicon or tin; and r is the valency of $M^6$.

Various compounds of the general formula (VIII) are available and specifically exemplified by an alkyllithium compound such as methyllithium, ethyllithium, propyllithium and butyllithium, an alkylmagnesium compound such as diethylmagnesium, ethylbutylmagensium and di-n-butylmagnesium; a dialkylzinc compound such as dimethylzinc, diethylzinc, dipropylzinc and dibutylzinc; an alkylgallium compound such as trimethylgallium, triethylgallium and tripropylgallium; an alkylboron compound such as triethylboron, tripropylboron and tributylboron; and an alkyltin compound such as tetraethyltin, tetrapropyltin and tetraphenyltin.

There are available a variety of compounds of the general formula (VIII) wherein $M^6$ is aluminum, which are specifically exemplified by trimethylaluminum, triethylaluminum, triisopropylaluminum, triisobutylaluminum, tri-n-hexylaluminum and trioctylaluminum.

The proportion of each component of the catalyst to be used in the present invention is not specifically limited, but the molar ratio of the component (a) to the component (b) is 1:20 to 1:10000, preferably 1:100 to 1:2000.

On the other hand, in the catalyst (2), the molar ratio of the component (a) to the component (c) is desirably 1:0.01 to 1:100, more desirably 1:1 to 1:10. In this case, the components (a) and (c) may be previously brought into contact with each other, followed by separation and washing of the resultant contact product for use, or may be brought into contact in the reacion system. The amount of the component (d) to be used as desired in the catalyst (1) or (2) is selected usually in the range of 0 to 100 mols per one (1) mol of the component (a). The use of the component (d) can improve the polymerization activity, but an excessive usage does not mainfest the effect corresponding thereto. The component (d) may be used by bringing it into contact with the component (a) or (c) or the contact product between the components (a) and (c) in advance or by the successive addition to the polymerization system.

The proportion of the styrenic monomer to the catalyst to be used is not particularly limited, but is selected usually in the range of 10 to $10^9$, preferably $10^2$ to $10^7$ in terms of the molar ratio of the styrenic polymer to the transition metal compound.

In the production of the styrenic polymer of the above-described styrenic monomer is polymerized in the presence of the above-described catalyst as the first step, in which the polymerization method, polymerization conditions including polymerization temperature and polymerization time, and the solvent to be used may be suitably selected. The polymerization is carried out at a temperature in the range of usually -50 to 200 °C, preferable 30 to 100 °C for 1 second to 10 hours, preferably 1 minute to 6 hours. As the polymerization method, any of slurry, solution, bulk and gas-phase polymerization is available with continuous or discontinuous polymerization. The usable solvents in solution polymerization are exemplified by aromatic hydrocarbons such as benzene, toluene, xylene and ethylbenzene and aliphatic hydrocarbons such as cyclopentane, hexane, heptane and octane, alone or as a combination of at least two of them. In this case, the monomer to solvent ratio by volume may be arbitrarily selected. The modification of the molecular weight and constitution of the polymer to be produced may be carried out by the conventional method. The modification of the molecular weight thereof may be effected by the use of hydrogen, regulation of temperature or monomer concentration or the like.

Subsequently to the first step in which the polymer is substantially produced, the terminal of the polymer is subjected to functionalizing treatment to provide the ceasing terminal of the structural unit represented by the general formula (I) with a functional group selected from the groups of carboxylic acid, carboxylic acid ester, hydroxyl, halogen, cyano, nitro, amino, ether, thioether and isocyanate. The functionalizing treatment is performed by reacting the produced polymer with a compound having a halogen atom or an active hydrogen atom and a substituent containing at least one atom selected from oxygen, nitrogen, sulfur, phosphorus and a halogen, or carbon dioxide or carbon disulfide.

Examples of the above-mentioned compound to be used for the functionalization treatment of the terminal (functionalizing agent) include halogen-substituted alcohols and phenols such as 4-bromophenethyl alcohol, 4-bromophenol, 3-bromo-1-propanol, 2-bromobenzyl alcohol, 4-bromo-2,6-dimethylphenol, 2-bromoethanol and 4-bromo-2-naphtol; carboxylic acids and ester compounds thereof such as α-bromo-p-toluic acid, o-bromobenzoic acid, m-bromobenzoic acid, p-bromobenzoic acid, succinic anhydride, 2-bromo-n-butyric acid, 6-bromohexanoic acid, α-bromoisobutyric acid, 2-bromoisobutyric acid, 2-bromopropionic acid, 3-bromopropionic acid, 11-bromoundecanoic acid, 5-bromovaleric acid, chloroacetic acid and bromoacetic acid; nitriles such as o-bromobenzonitrile, m-bromobenzonitrile, p-bromobenzonitrile, α-bromotrinitrile, 3-bromopropionitrile and 4-bromobutyronitrile; ketones such as bromoacetone, α-bromoacetophenone, 1-bromo-2-butanone, 2'-bromoacetophenone, 3'-bromoacetophenone and 4-bromoacetophenone; ethers such as o-bromoanisole, epichlorohydrin, 4-bromo-diphenyl ether, epibromohydrin, 2-bromoethyl ethyl ether and bromomethyl ether; amines such as o-bromoaniline, m-bromoaniline, p-bromoaniline, 4-bromo-N,N-dimethylaniline, 2-bromo-4-methylaniline, 3-bromophenylhydrazine hydrochloride and 3-bromopropylamine; nitro compounds such as o-bromonitrobenzene; sulfonic acids such as sodium 2-bromosulfonate and 2-bromosulfonic acid; olefins and acetylenes such as 4-bromo-1-butene, 2-bromo-2-butene, 5-bromo-1-pentene, 3-bromo-1-propene, 3-chloro-1-propene, 3-bromo-1-propene and chloromethylstyrene; halogenides such as bromodichloromethane; acid chlorides such as bromoacetyl chloride and m-bromobenzoyl chloride; isocyanate compounds; and carbon dioxide. Any of the above-exemplified functionalizing agents may be employed alone or in combination with at least one of them.

The functionalizing treatment for the polymerization terminal is not specifically limited in its conditions, but may be carried out at a temperature in the range of usually - 80 to 100 °C, preferably -30 to 80 °C for a reaction time of 0.1 second to 3 hours, preferably 1 second to 1 hour by the use of the terminal functionalizing agent in an amount of usually 0.1 to $10^6$ mols, preferably 1 to $10^4$ mols per 1 mol of the transition metal compound.

The terminal-functionalized styrenic polymer having a high degree of syndiotactic configuration is obtained in this way. Here, the syndiotactic configuration means that its stereochemical structure is of syndiotactic configuration, that is, the stereostructure in which phenyl groups or substituted phenyl groups as side chains are located alternately at opposite directions relative to the main chain consisting of carbon-carbon bonds. Tacticity is quantitatively determined by the nuclear magnetic resonance method ($^{13}C$-NMR method) using carbon isotope. The tacticity as determined by the $^{13}C$-NMR method can be indicated in terms of proportions of structural units continuously connected to each other, i.e., a diad in which two structural units are connected to each other, a triad in which three structural units are connected to each other and a pentad in which five structural units are connected to each other. "The styrenic copolymers having such syndiotactic configuration as mentioned in the present invention usually means a polymer having such syndiotacticity that the proportion of racemic diad is at least 75%, preferably at least 85%, or the proportion of racemic pentad is at least 30%, preferably at least 50% in the main chain structure of styrenic repeating units. However, the degree of syndiotactic configuration varies to some extent depending on the types of substituents and the like.

It is necessary that the styrenic polymer of the present invention obtained in the above-mentioned manner has a reduced viscosity of 0.01 to 20, as measured at a concentration of 0.05 g/dl in 1,2,4-trichlorobenzene at 135 °C. A reduced viscosity thereof less than 0.01 dl/g results in failure to sufficiently manifest the physical properties as the polymer, whereas the reduced viscosity exceeding 20 dl/g causes deterioration of moldability and workability.

One of the multi-layer materials of the present invention comprises at least one layer consisting of the above-mentioned terminal-functionalized styrenic polymer having a high degree of syndiotactic configuration and at least one different layer, the material of which is not specifically limited but may be made of, for example, a thermoplastic resin, a thermosetting resin, a metal or other material.

Various types of termoplastic resins are available and exemplified by polyolefin resin, polystyrene resin, condensation high polymer, addition polymerization high polymer, etc. Specific examples of polyolefin resins include high density polyethylene, low density polyethylene, poly-3-methylbutene-1, poly-4-methyl-pentene-1, linear low density polyethylene obtained by the use of such a comonomer as butene-1; hexene-1; octene-1; 4-methylpentene-1; 3-methylisobutene-1 or the like, and chemically modified products thereof, ethylene/vinyl acetate copolymer, saponified product thereof, ethylene/acrylic acid copolymer, ethylene/acrylic ester copolymer, ethylenic ionomer, polypropylene, chemically modified products thereof, etc. Specific examples of polystyrene resin include general-purpose polystyrene, isotactic polystyrene, syndiotactic polystyrene other than the above-described one, high impact polystyrene (rubber modified), etc. Specific examples of the condensation high polymer include polyacetal resin, polycarbonate resin, polyamide resin such as nylon 6 and nylon 6.6, polyester resin such as polyethylene terephthalate and polybutylene terephthalate, polyphenylene oxide resin, polyimide resin, polysulfone resin, polyethersulfone resin, polyphenylene sulfide resin, etc. Specific examples of addition polymer include a polymer obtained from a polar vinyl monomer, a polymer obtained from a diene monomer, etc. enumerated by poly(methyl methacrylate), polyarylonitrile, acrylonitrile/butadine copolymer, acrylonitrile/butadiene/styrene copolymer, a polymer having hydrogenated diene chains, thermoplastic elastomer, etc.

Examples of such termosetting resins include phenolic resin, epoxy resin, unsaturated polyester resin, fiber-reinforced product therefrom and the like.

Examples of such metallic materials include aluminum, copper, iron, nickel, tin, chromium, silver, stainless steel, duralumin, brass, etc. Examples of the other materials include ceramics, glass, paper, fiber, fabric, wood etc. Any of the above-exemplified material may be used alone or in combination with at least one other material according to the purpose of use.

Each layer or part constituting the multi-layer material of the present invention may be in a variety of shapes and states including, for example, film, sheet, fiber (woven fabric or nonwoven fabric), moldings, sinter, single crystal, foam, porous material, etc.

The method of multi-layering the materials is not specifically limited, but may be in accordance with any of the various conventional methods, exemplified by coextrusion, lamination pressing etc. for the material of the different layer being a thermoplastic resin. When the material of the different layer is a metal, particularly the metal to be laminated is comparatively thin, lamination, metal vapor deposition, electrostatic coating and the like are available. When a material is laminated onto a molding or a thick material, there is available a method in which the molding or the thick material is covered with a film or sheet by heat fusion, impregnation or coating.

The multi-layer material of the present invention may be in a variety of shapes and states and comprises the layers of film, sheet, fiber, fabric, moldings, sinter, single crystal, foam or porous material, the surface of which contains the styrenic copolymer, said layers being laminated or covered by

impregnation or coating, etc. or comprises the complex material thereof.

Another multi-layer material of the present invention comprises as the component (A), at least one layer composed of the aforestated terminal-functionalized styrenic polymer having a high degree of syndiotactic configuration, and as the component (B), at least one layer of a resin composition composed of at least one member selected from a thermoplastic resin, an inorganic filler and an organic filler. Examples of the thermoplastic resin to be used as the component (B) include polyolefin resin, polystyrene resin, condensation high polymer, addition polymerization high polymer, etc. Specific examples of polyolefin resins include high density polyethylene, low density polyethylene, poly-3-methyl-butene-1, poly-4-methyl-pentene-1, linear low density polyethylene obtained by the use of such a comonomer as butene-1; hexene-1; octene-1; 4-methylpentene-1;3-methylisobutene-1 or the like, and chemically modified products thereof, ethylene/vinyl acetate copolymer, saponified product thereof, ethylene/acrylic acid copolymer, ethylene/acrylic ester copolymer, ethylenic ionomer, polypropylene chemically modified products thereof etc. Specific examples of polystyrene resin include general-purpose polystyrene, isotactic polystyrene syndiotactic polystyrene other than the above-described one, high impact polystyrene (rubber modified), etc. Specific examples of the condensation high polymer include polyacetal resin, polycarbonate resin, polyamide resin such as nylon 6 and nylon 6•6, polyester resin such as polyethylene terephthalate and polybutylene terephthalate, polyphenylene oxide resin, polyimide resin, polysulfone resin, polyethersulfone resin, polyphenylene sulfide resin, etc. Specific examples of addition polymer include a polymer obtained from a polar vinyl monomer, a polymer obtained from a diene monomer, etc. enumerated by poly(methyl methacrylate), polyarylonitrile, acrylonitrile/butadine copolymer, acrylonitrile/butadiene/styrene copolymer, a polymer having hydrogenated diene chains, thermoplastic elastomer, etc. The thermoplastic resin is preferably the one having a substituent or a terminal functional-group which is reactive with the functional group of the styrenic polymer as the component (A), and it may be used alone or in combination with at least one different thermoplastic resin.

The types of the inorganic filler and the organic filler to be used as the component (B) in the present invention are not specifically restricted, but may be the known types having various forms such as granule, plate, lamella, fiber and whisker.

As the inorganic filler, there are usable inorganic-matter type filler, metallic filler, ceramics filler, etc. Examples of the inorganic-matter type filler include an oxide such as silica, diatomaceous earth, barium ferrite, berylium oxide, pumice and pumice balloon; a hydroxide such as aluminum hydroxide, magnesium hydroxide and basic magnesium carbonate; a carbonate such as calcium carbonate, magnesium carbonate, dolomite and dosonite; a sulfate or sulfite such as calcium sulfate, barium sulfate, ammonium sulfate and calcium sulfite; a silicate such as talc, clay, mica, asbestos, glass fiber, glass balloon, glass bead, calcium silicate, montmorillonite and bentonite; a carbon such as carbon black, graphite, carbon fiber and hollow carbon sphere; molybdenum sulfide; boron fiber; zinc borate; barium metaborate; calcium borate; and sodium borate.

Examples of the metallic filler include a metal element, metal compound, alloy, etc. each in the form of powder or granule, specifically exemplified by a metal element such as zinc, copper, iron, lead, aluminum, nickel, chromium, titanium, manganese, tin, platinum, tungsten, gold, magnesium, cobalt and strontium; the oxide thereof; an alloy such as stainless steel, solder and brass; metallic fiber such as aluminum fiber, stainless-steel fiber, copper fiber, bronze fiber, nickel fiber, potassium titanate fiber, other simple metal fiber and synthetic fiber and corresponding metal whiskers.

Examples of the ceramics filler include silicon carbide, silicon nitride, zirconia, aluminum nitride, titanium carbide each in the form of powder, granule, fiber of whisker.

Examples of the organic filler include shell fiber such as husk, wooden powder, cotton, jute, paper piece, cellophane piece, aromatic polyamide fiber, polyimide fiber, cellulose fiber, nylon fiber, polyester fiber, ultrahigh molecular polyethylene fiber, polypropylene fiber and thermosetting resin powder. The above-mentioned filler may be used alone or in combination with at least one of other fillers.

The above-mentioned resin composition according to the present invention may be subjected as desired to the addition of at least one additive enumerated by heat resistant stabilizer, weatherproof stabilizer, antistatic agent, sliding agent, anti-blocking agent, anti-fogging agent, lubricant, foaming agent, dye, pigment, natural oil, synthetic oil, wax, etc. in a pertinent compounding ratio. Specific examples of the stabilizers to be optionally compounded include phenolic antioxidant such as tetrakis [methylene-3(3,5-di-tert-butyl-4-hydroxyphenyl)propionate] methane, $\beta$-(3,5-di-tert-butyl-4-hydroxyphenyl)propionic alkylester and 2,2'-oxamindebis-[ethyl-3(3,5-di-tert-butyl-4-hydroxyphenyl)]propionate; metallic salt of fatty acid such as zinc stearate, calcium stearate and calcium 12-hydroxystearate; polyhydric alcohol-fatty acid ester such as glycerol monostearate, glycerol monolaurate, glycerol distearate, pentaerythritol monostearate, pentaerythritol distearate and pentaerythritol tristearate. Each of the aforementioned additives may be compounded alone or in combination with other additive/s, which combination being exemplified as the preferable one by tetrakis[methylene-3(3,5-di-tert-butyl-4-hydroxyphenyl)propionate]methane, zinc stearate and glycerol monostearate.

The compounding ratio by weight of the styrenic polymer as the component (A) to the thermoplastic resin when used as the component (B) in the resin composition is selected in the range of usually 0.5:99.5 to 99.5:0.5, preferably 1:95 to 99:5.

The compounding ratio by weight of the styrenic polymer as the component (A) to the inorganic filler or the organic filler, when compounded in the composition as the component (B) is desirably 20:80 to 95:5, more desirably 40:60 to 90:10.

The compounding ratio by weight of the resin mixture of the styrenic polymer as the component (A) with the thermoplastic resin as the component (B) to the inorganic filler or the organic filler, when compounded in the resin composition, is desirably 20:80 to 95:5, more desirably 40:60 to 90:10.

The resin composition of the present invention can be prepared by any of various procedures without specific limitation, preferably by the melt kneading that is conventionally used in a thermoplastic resin composition by the use of a known means such as Banbury mixer, single-screw or twin-screw extruder, kneader, continuous mixer or mixing roll, or by means of solution blending using a suitable solvent.

The above-mentioned multi-layer material comprises at least one layer consisting of the resin composition obtained in the above manner, and the material of the other layer is not specifically limited, but is exemplified by a thermoplastic resin, a thermosetting resin, a metal and other material.

Examples of the thermoplastic resin include those as exemplified in the description of the component (B). The thermosetting resin is exemplified by phenolic resin, epoxy resin, unsaturated polyester resin and fiber-reinforced product therefrom.

Examples of the metallic materials include aluminum, copper, iron, nickel, tin, chromium, silver, stainless steel, duralumin, and brass. Examples of the other materials include ceramics, glass, paper, fiber, fabric and wood. Any of the above-exemplified material may be used alone or in combination with at least one other material according to the purpose of use.

Each layer or part constituting the multi-layer material of the present invention may be in a variety of shapes and states including, for example, film, sheet, fiber (woven fabric or nonwoven fabric), moldings, sinter, single crystal, foam, porous material, etc.

The method of multi-layering the materials is not specifically limited, but may be in accordance with any of the various conventional methods, exemplified by coextrusion, lamination pressing, etc. for the material of the different layer being a thermoplastic resin. When the material of the different layer is a metal, particularly the metal to be laminated is comparetively thin, lamination, metal vapor deposition, electrostatic coating and the like are available. When a material is laminated onto a molding or a thick material, there is available a method in which the molding or the thick material is covered with a film or sheet by heat fusion, impregnation or coating.

The multi-layer material of the present invention may be in a variety of shapes and states and comprises the layers of film, sheet, fiber, fabric, moldings, sinter, single crystal, foam or porous material, the surface of which contains the styrenic polymer, said layers being laminated or covered by impregnation or coating, etc. or comprises the complex material thereof.

The above-mentioned multi-layer materials are widely utilized in a variety of fields including automobile parts, electrical and electronic parts as well as film, sheet (especially stampable sheet), container and packaging materials.

The styrenic polymer according to the present invention is a terminal-functionalized highly syndiotactic styrenic-polymer which preserves the crystalline property as one of the characteristics of a syndiotactic polystyrene and possesses excellent capabilities of compatibility and adhesiveness. Accordingly, it is favorably employed in such field that requires adhesiveness with a metal including vapor-deposited film, multi-layer material, etc.

In addition, the resin composition comprising a terminal-functionalized highly syndiotactic styrenic-polymer, a thermoplastic resin and/or an inorganic filler and an organic filler is the composition produced by compositing the aforesaid components without impairing the advantages inherent in a syndiotactic polystyrene such as resistance to solvents, hydrolysis, heat, hot water, etc. The resin composition can be made into high-performance moldings and multi-layer material such as film and sheet, and is favorably employed, for example, in automobile parts, electronic and electrical appliances and parts and packaging materials.

In the following, the present invention will be described in more detail with reference to examples and comparative examples, which however, shall not be construed to limit the invention thereto.

(1) Preparation of methylalumioxane

In a 500 ml glass vessel which had been purged with argon were placed 200 ml of toluene, 17.7g (71 mmol) of copper sulfate pentahydrate ($CuSO_4 \cdot 5H_2O$) and 24 ml (250 mmol) of trimethylaluminum, which were then reacted at 40 °C for 8 hours. Then, the solids were separated from the reaction mixture and the toluene was distilled away from the solution as obtained above under reduced pressure to obtain 6.7g of a contact product (methylalumioxane). The molecular weight thereof as determined by the freezing point depression method was 610. Further, when the area of the high magnetic field component by $^1H$-NMR spectral analysis based on Japanese Patent Application Laid-Open No.325391/1987, that is, the proton nuclear magnetic resonance spectral of the methylaluminoxane in toluene solvent at room temperature was observed, the methyl proton signal due to $Al\text{-}CH_3$ was observed in the region of 1.0 to -0.5 ppm (tetramethylsilane (TMS) standard). Since the proton signal of TMS (0 ppm) was in the region of methyl proton signal due to $Al\text{-}CH_3$, the methyl proton signal due to $Al\text{-}CH_3$ was measured with 2.35 ppm methyl proton signal of toluene in TMS, and the methyl proton signal due to $Al\text{-}CH_3$ was divided into two components. As the result, the high magnetic field component (i.e -0.1 to -0.5 ppm) was 43% of the total signal area.

(2) Polymerization of p-methylstyrene

A one (1) liter three-necked flask was charged with 150 ml of toluene, 40 mmol of the methylalumioxane as prepared in the preceding (1) and 20 ml of p-methylstyrene in an atmosphere of nitrogen. The resultant mixture was heated to 80 °C, maintained at 80 °C for 5 minutes and then incorporated with 100 μmol of cyclopentadienyltitanium trimethoxide [ Cp Ti $(OMe)_3$] to initiate polymerization. After 8 minutes of polymerization, the terminal-functionalizing agent as listed in Table 1 was added by 1/4 portion 4 times to the reaction product to effect functionalizing treatment for 1 minute, and thereafter methanol was poured therein for deactivation. The results obtained are given in Table 1.

Table 1

| Example | Terminal-functionalizing agent kind | Terminal-functionalizing agent charge (mmol) | Yield (g) | Reduced viscosity (dl/g) | Infrared absorption spectrum ($cm^{-1}$) |
|---|---|---|---|---|---|
| 1-(2)-1 | carbon dioxide | flow system | 0.21 | 0.10 | 1710 |
| 1-(2)-2 | 5-bromovaleric acid | 10 | 0.22 | 0.09 | 1710 |

Remarks : Solvent ; 30 ml of toluene at 40 to 50°C.
Reduced viscosity was measured at a concnetration of 0.05 g/dl in 1,2,4-trichlorobenzene at 135°C.

As is shown in Table 1, there was observed the absorption assigned to carboxylic acid in infrared absorption (IR) spectrum. As a result of $^{13}C$-NMR analysis, $C_1$-carbon signal of 142.1 ppm was observed, whereby the syndiotactic configuration of the resultant styrenic polymer was confirmed.

Examples 2 to 4

Terminal-functionalized syndiotactic polystyrene was prepared under the conditions given in Table 2. A small amount of each polymer was dissolved in toluene, and development was made by thin-layer chromatography using a mixture of hexane/chloroform (50/50 by volume) as the developing agent. As a result, Rf values in Example 2 indicated smaller values as compared with those of syndiotactic polystyrene

which did not undergo functionalizing treatment. Consequently, each polymer as obtained in Examples 2 to 4 respectively, was proved to have a polarity higher than that of the conventional syndiotactic polystyrene and believed to has been functionalized.

Table 2

| | SPS polymerization time (min.) | Terminal-functionalizing agent | | Reaction time with functionalizing agent (min.) | Yield (g) | melting point (°C) | Reduced viscosity (dl/g) |
|---|---|---|---|---|---|---|---|
| | | kind | charge (mmol) | | | | |
| Example 2 | 10 | epibromohydrin | 20 | 0.5 | 0.52 | 252 | 0.29 |
| Example 3 | 10 | 5-bromovaleric acid | 20 | 1 | 0.52 | 251 | 0.28 |
| Example 4 | 10 | carbon dioxide | flow system | 1 | 0.53 | 251 | 0.28 |

Remarks : toluene ; 50 ml, styrene ; 8 ml, methylaluminoxane ; 3.75 mmol,
$CpTiCl_3$ (cyclopentadienyltitanium trichloride) ; 10 μmol,
temperature ; 70°

Examples 5 to 7

High molecular terminal-functionalized syndiotactic polystyrene was prepared under the conditions given in Table 3. Although the terminal thereof was not confirmed by the precedure in Examples 2 to 4, it is presumed to have been terminal-functionalized as well because of the enhanced solvent resistance.

Table 3

| | SPS polymerization time (min.) | Terminal-functionalizing agent: kind | Terminal-functionalizing agent: charge (mmol) | Reaction time with functionalizing agent (min.) | Yield (g) | melting point (°C) | Reduced viscosity (dl/g) |
|---|---|---|---|---|---|---|---|
| Example 5 | 10 | epibromohydrin | 2 | 1 | 1.21 | 269 | 1.88 |
| Example 6 | 10 | 5-bromovaleric acid | 2 | 2 | 1.20 | 269 | 1.90 |
| Example 7 | 10 | succinic anhydride | 3 | 2 | 1.25 | 269 | 1.92 |

Remarks : toluene ; 50 ml, styrene ; 10 ml, methylaluminoxane ; 3 mmol, $Cp^*Ti(OMe)_3$ (pentamethylcyclopentadienyltitanium trimethoxide) ; 5 μmol, temperature ; 70°C

Example 8

(1) Preparation of tri(n-butyl)ammonium tetra(pentafluorophenyl)borate

Pentafluorophenyllithium which was prepared from 152 mmol of bromopentafluorobenzene and 152 mmol of butyllithium was reacted with 45 mmol of trichloroboron in hexane to produce tri-(pentafluorophenyl)boron as white solid, 41 mmol of which was reacted with 41 mmol of pentafluoropenyllithium to produce lithium tetra(pentafluorophenyl)boron as white solid and isolate the same.

Then, 16 mmol of lithium tetra(pentafluorophenyl)boron was reacted with 16 mmol of tri-n-butylamine hydrochloride in water to produce 12.8 mmol of tri(n-butyl)ammonium tetra(pentafluorophenyl)borate as white solid.

(2) Preparation of epichlorohydrin-terminated syndiotactic polystyrene

In a dry vessel were place 150 ml of toluene, 200 ml of styrene and 0.5 mmol of triisobutylaluminum (TIBA) as the catalyst in an argon atmosphere at room temperature, and the resultant mixture was allowed to stand for 30 min. Subsequently into the vessel were further introduced 5 μmol of tri(n-butyl)ammonium tetra(pentafluorophenyl)borate as prepared in the above item (1) and 5 μmol of pentamethylcyclopentadienyltrimethyltitanium to carry out polymerization reaction for 2 hours. Thereafter 2 mmol of epichlorohydrin was added to the reaction product to react therewith for 10 min. After the completion of the reaction methanol was poured in the system to arrest reaction. The resultant reaction mixture was filtered, washed with methanol three times and dried under reduced pressure to afford 79 g of a polymer. The polymer thus obtained had a melting point of 269 °C and a reduced viscosity of 1.92 dl/g as measured at a concentration of 0.05 g/dl in 1,2,4-trichlorobenzene at 135 °C. As is the case with Examples 5 to 7, the terminal of the polymer was not confirmed because of its high molecular weight, but it is presumed to have been functionalized in the same manner.

Example 9 (Multi-layer material)

A sheet with a dimension of 5 x 5 x 0.1 cm made of nylon 6•6 (produced by Ube Industries Ltd. model No. 202B) was placed in a mold with 5 x 5 x 0.2 cm, uniformly covered with the terminal-modified syndiotactic polystyrene powder as obtained in Example 8-(2), heated to 290 °C on a press plate and melt-worked for 5 min. Thereafter the sheet was cooled to afford a mult-layer material with favorable interfacial adhesion consisting of nylon 6•6 and syndiotactic polystyrene.

Preparation Examples 1 to 5

In a 200 ml flask which had sufficiently been purged with nitrogen were placed toluene, styrene and aluminoxane each in an amount as shown in Table 4, respectively with stirring at 75 °C for 5 hours. Thereafter, pentamethylcyclopentadienyltitanium trimethoxide {$Cp^*Ti(OMe)_3$} in an amount as shown in Table 4 was placed in the flask to proceed with polymerization each for a prescribed time and then a terminal ceasing agent (terminal-functionalized agent) was further added to the reaction system to effect reaction for a prescribed time.

After the completion of the reaction, the resultant polymer was poured into a mixed solution of methanol and hydrochloric acid for deashing and thoroughly washed with methanol to recovery the polymer in the form of white powder. The results obtained including the reaction conditions, etc. are giving in Table 4. In the above-mentioned preparation, styrene was used in Preparation Examples 1 to 4, p-methylstyrene was used in Preparation Example 5 and polymerization temperatures were set to 75 °C in Preparation Examples 1-4 and to 50 °C in Preparation Example 5.

The melting point of the product polymer was measured by the use of a differential scanning calorimeter, DSC-200 (produced by Seiko Electronics, Co., Ltd) in a nitrogen atmosphere according to the under-mentioned profile, in which the melting point as observed in item (4) was adopted.

(1) 30 to 305 °C, 20 °C/min. (temperature rise rate)
(2) 305 °C , maintained for 5 min.
(3) 305 to 30 °C, 7 °C/min. (temperature fall rate)
(4) 30 to 300 °C, 20 °C/min. (temperature rise rate)

The reduced viscosity of the product polymer was measured at a concentration of 0.05 g/dl in 1,2,4-trichlorobenzene at 135 °C.

Table 4

| | Charge | | | | SPS | Terminal-functionalizing agent | | |
|---|---|---|---|---|---|---|---|---|
| | toluene (ml) | styrenic monomer (ml) | aluminoxane (mmol) | $Cp^*Ti(OMe)_3$ (µmol) | polymerization time (min.) | kind | charge (mmol) | reaction time (min.) |
| Preparation Example 1 | 50 | 25 | 4 | 10 | 45 | allylamine | 20 | 1 |
| Preparation Example 2 | 50 | 25 | 4 | 10 | 30 | epibromohydrin | 20 | 1 |
| Preparation Example 3 | 50 | 25 | 4 | 10 | 30 | 5-bromovaleric acid | 20 | 1 |
| Preparation Example 4 | 50 | 25 | 4 | 10 | 10 | carbon dioxide | flow system | 1 |
| Preparation Example 5 | 100 | 10 | 20 | 50 | 7 | epibromohydrin | 50 | 0.5 |

Table 4 (continued)

| | Polymer | | | |
|---|---|---|---|---|
| | Yield (g) | MIP[1)] (wt%) | melting point (°C) | reduced viscosity (dl/g) |
| Preparation Example 1 | 4.32 | 98.1 | 270 | 1.88 |
| Preparation Example 2 | 1.02 | 98.0 | 269 | 0.98 |
| Preparation Example 3 | 0.90 | 97.7 | 269 | 2.25 |
| Preparation Example 4 | 0.93 | 98.9 | 269 | 2.41 |
| Preparation Example 5 | 6.54 | - | - | 1.21 |

Remarks : MIP ; Methyl ethyl ketone insoluble portion with Soxhlet extractor

Examples 10 to 14

The sindiotactic polystyrene-based polymer as obtained in any of Preparation Examples 1 to 5 was mixed with a compatibilizing agent in a ratio as shown in Table 5, and the mixture was kneaded at 300 °C for 5 min. by means of a compact type molding machine (produced by Custom Scientific Instrument Inc.

Model CS-183), followed by extrusion for forming strands. The electron micrographs ( x 1000 magnification) of the fractured surfaces of the strands obtained from the resin compositions were taken, and the compatible states of the resin composition were observed from the micrographs. The enlarged sectional views of the strands are given in Figs 1 to 5.

Table 5

| | Resin Composition | | |
|---|---|---|---|
| | SPS-based polymer (g) | compatibilizing resin (g) | Electron micrograph |
| Example 10 | polymer in Prepartion Example 1 (0.5) | maleic anhydride-modified high density polyethylene[1)] (0.5) | FIg. 1 |
| Example 11 | polymer in Prepartion Example 2 (0.68) | nylon 6・6[2)] (0.32) | FIg. 2 |
| Example 12 | polymer in Prepartion Example 3 (0.095) | nylon 6・6[2)] (0.905) | FIg. 3 |
| Example 13 | polymer in Prepartion Example 4 (0.5) | nylon 6・6[2)] (0.5) | FIg. 4 |
| Example 14 | polymer in Prepartion Example 5 (0.5) | nylon 6・6[2)] (0.5) | FIg. 5 |

Remarks 1) : Produced by Idemitsu Petrochemical Co., Ltd. under the tradename "Polytack". Maleic anhydride-modification ratio of 2.14% by weight.

2) : Produced by Ube Industries, Ltd. model No. 2020B.

Comparative Examples 1 to 5

The composition of syndiotactic polystyrene-based polymer and compatibilizing agent in a compounding ratio given in Table 5 was prepared in the similar manner to the above-described examples except that there were used, in Comparative Examples 1 to 4, the syndiotactic polystyrenes that had been produced under the conditions each corresponding to those of Examples 10 to 13, respectively but without the use of any terminal ceasing agent (functionalizing agent) and that there was used, in Comparative Example 5, the syndiotactic polystyrene that had been produced under the conditions corresponding to those of Example 14 but without the use of any functionalizing agent. The electron micrographs ( x 1000 magnification) of the fractured surfaces of the strands obtained from the resin composition were taken, and the compatible states of the resin composition were observed from the micrographs. The enlarged sectional views of the strands are given in Figs 6 to 10.

Comparative Example 1 corresponding to Example 10 : Fig.6
Comparative Example 2 corresponding to Example 11 : Fig.7
Comparative Example 3 corresponding to Example 12 : Fig.8
Comparative Example 4 corresponding to Example 13 : Fig.9
Comparative Example 5 corresponding to Example 14 : Fig.10

Example 15 (Multi-layer material)

The multi-layer materials were produced under the conditions as shown in Table 6. Each of them exhibited favorable interfacial adhesion.

Table 6

| | Component A | Component B | Production Process[1)] |
|---|---|---|---|
| Example 15-1 | Compositioin in Example 2 | aluminum | melt press |
| Example 15-2 | Composition in Example 2 | syndiotactic polystyrene[2)] | melt press |
| Example 15-3 | Composition in Example 1 | high density polystyrene[3)] | melt press |

Remarks 1) Pressed at 290°C for 5 min.

2) Molecular weight (Mw); 430,000

3) Produced by Idemitsu Petrochemical Co., Ltd. model No. 640 UF

Component A ; Sheet (3x3x0.05 cm)

Component B ; sheet (3x3x0.05 cm) or plate

## Claims

1. A styrenic polymer which has at least one functional group at a ceasing terminal of the structural unit represented by the general formula (I)

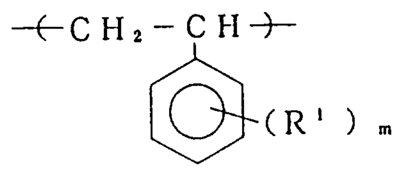

wherein $R^1$ is a hydrogen atom, a halogen atom or a substituent having at least one atom selected from carbon, tin and silicon and may form a condensed ring together with a benzene ring, m is an integer from 1 to 5 and when m is 2 or more, each $R^1$ may be the same or different, and which has a reduced viscosity of 0.01 to 20 dl/g as measured at a concentration of 0.05 g/dl in 1,2,4-trichlorobenzene at 135°C, the stereoregularity of the main chain consisting of said structural units being of highly syndiotactic.

**2.** The styrenic polymer according to Claim 1 wherein the functional group at a terminal thereof is at least one group selected from among the groups of carboxylic acid, carboxylic acid ester, hydroxyl, halogen, cyano, nitro, amino, ether, thioether and isocyanate.

**3.** A multi-layer material which comprises at least one layer composed of the styrenic polymer as set forth in Claim 1.

**4.** A multi-layer material which comprises at least one layer composed of the styrenic polymer as set forth in Claim 2.

**5.** A resin composition which comprises (A) the styrenic polymer as set forth in Claim 1 and (B) at least one member selected from among a thermoplastic resin, an inorganic filler and an organic filler.

**6.** A resin composition which comprises (A) the styrenic polymer as set forth in Claim 2 and (B) at least one member selected from among a thermoplastic resin, an inorganic filler and an organic filler.

**7.** A multi-layer material which comprises at least one layer composed of the resin composition as set forth in Claim 5.

**8.** A mult-layer material which comprises at least one layer composed of the resin composition as set forth in Claim 6.

**9.** A process for producing a styrenic polymer as set forth in Claim 1 which comprises polymerizing a styrenic monomer repressented by the general formula

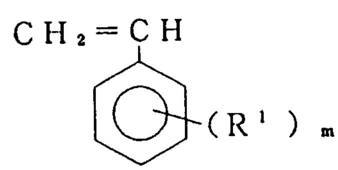

wherein $R^1$ is a hydrogen atom, a halogen atom or a substituent having at least one atom selected from carbon, tin and silicon and may form a condensed ring together with a benzene ring, m is an integer from 1 to 5 and when m is 2 or more, each $R^1$ may be the same or different, in the presence of a catalyst comprising as principal components (1) (a) a transition metal compound and (b) an aluminoxane; or (2) (a) a transitional metal compound and (c) a compound capable of reacting with said transition metal compound to form an ionic complex, to substantially form a polymer and subsequently reacting said polymer with a compound selected from a compound having a halogen atom or an active hydrogen atom and a substituent containing at least one atom selected from oxygen, nitrogen, sulfur, phosphorus and a halogen, carbon dioxide and carbon disulfide.

**10.** The process according to Claim 9 wherein the functional group at a terminal thereof is at least one group selected from among the groups of carboxylic acid, carboxylic acid ester, hydroxyl, halogen,

cyano, nitro, amino, ether, thioether and isocyanate.

FIG. 1

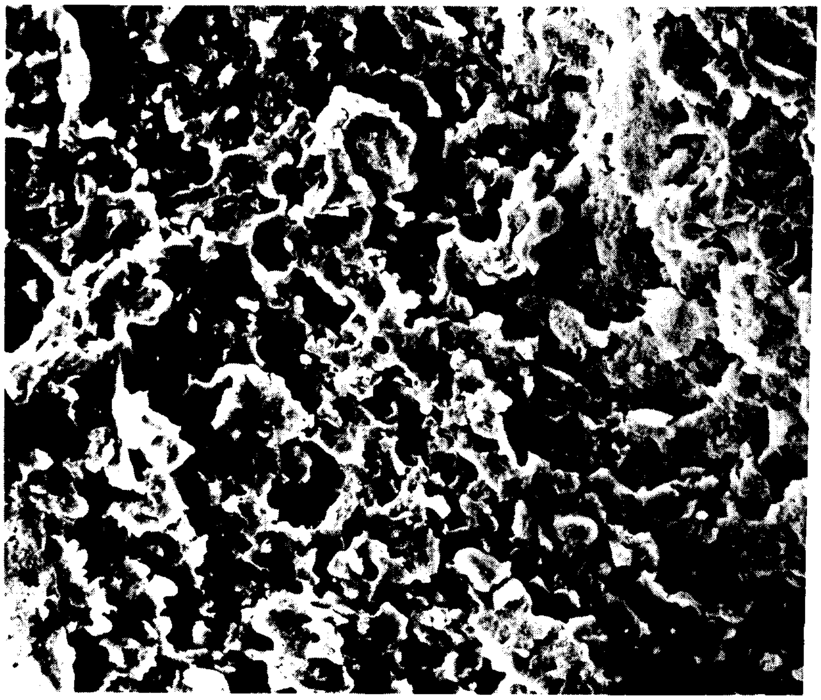

FIG. 2

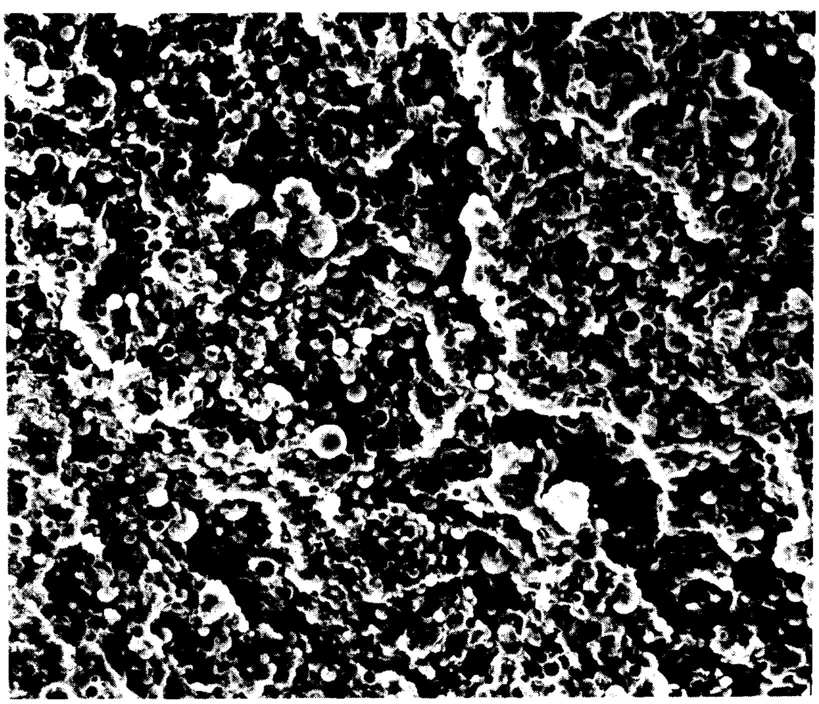

FIG. 3

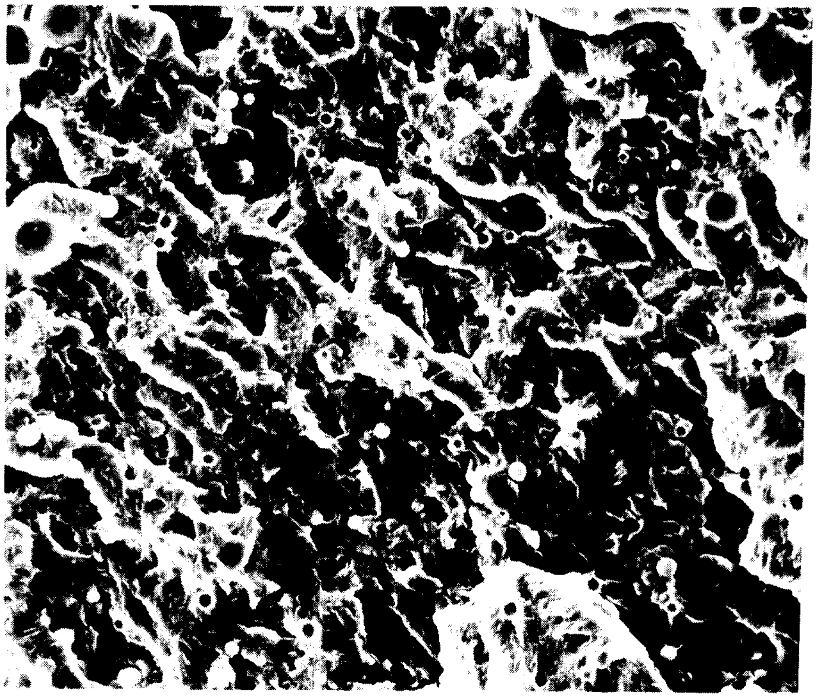

FIG. 4

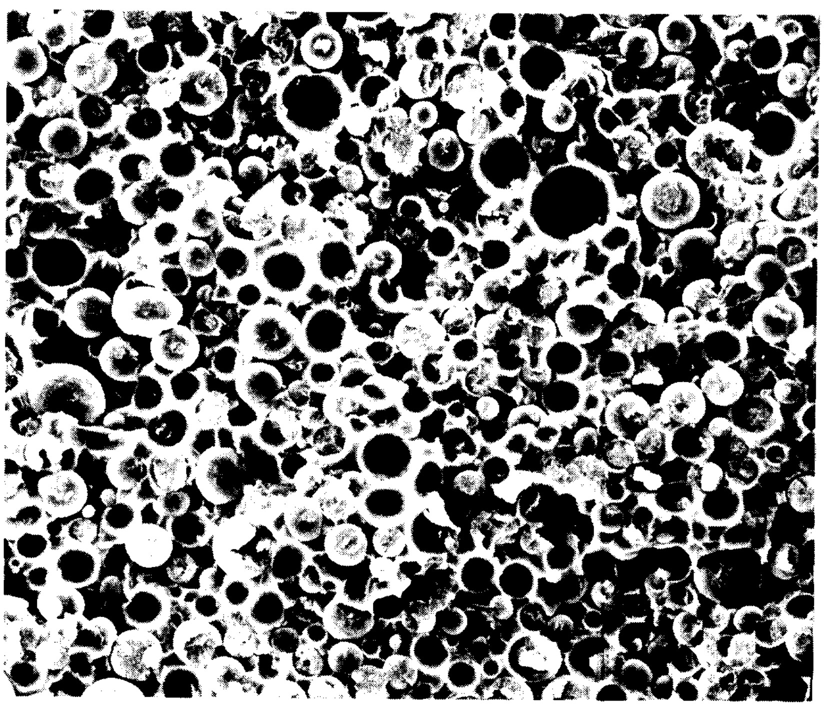

FIG. 5

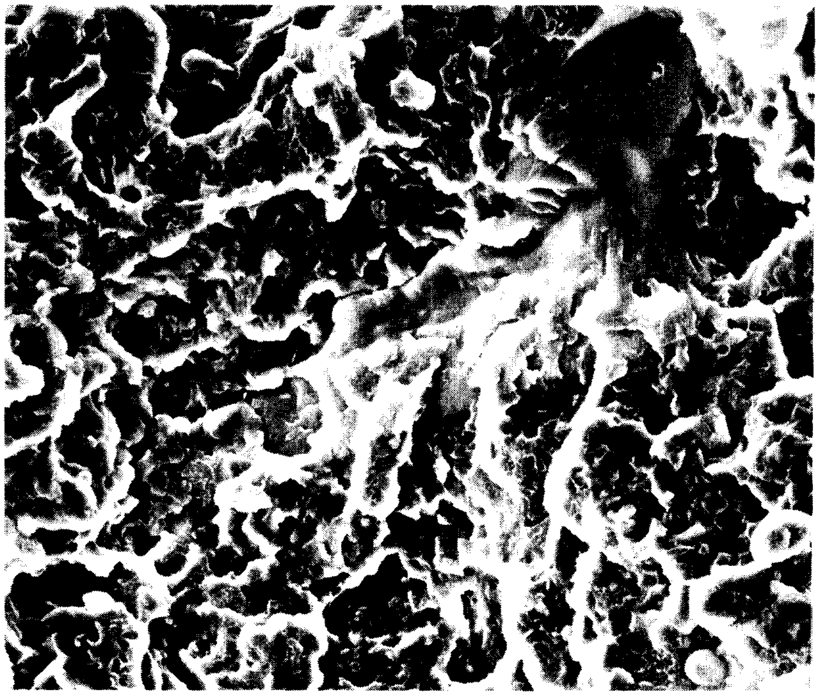

FIG. 6

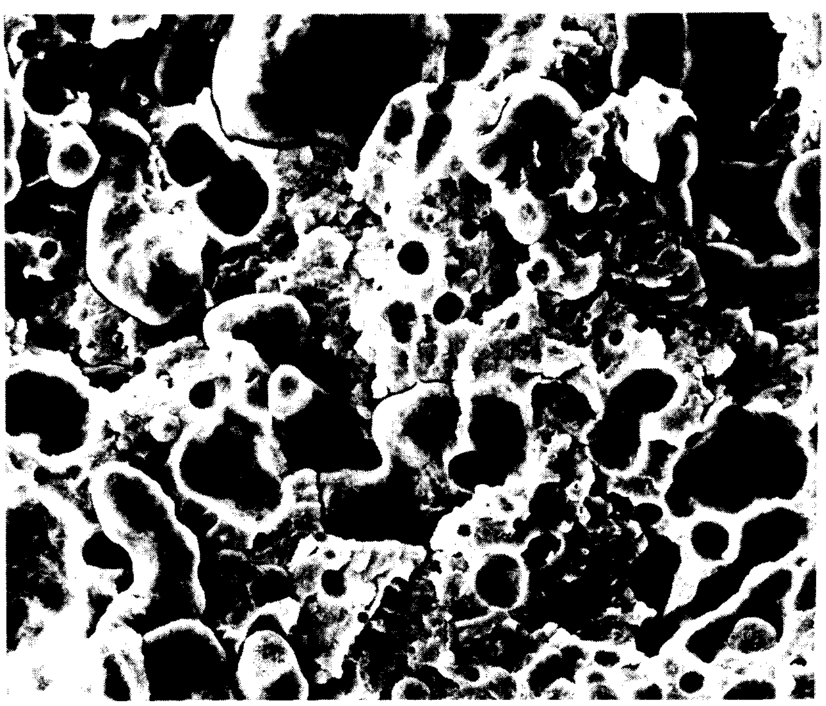

FIG. 7

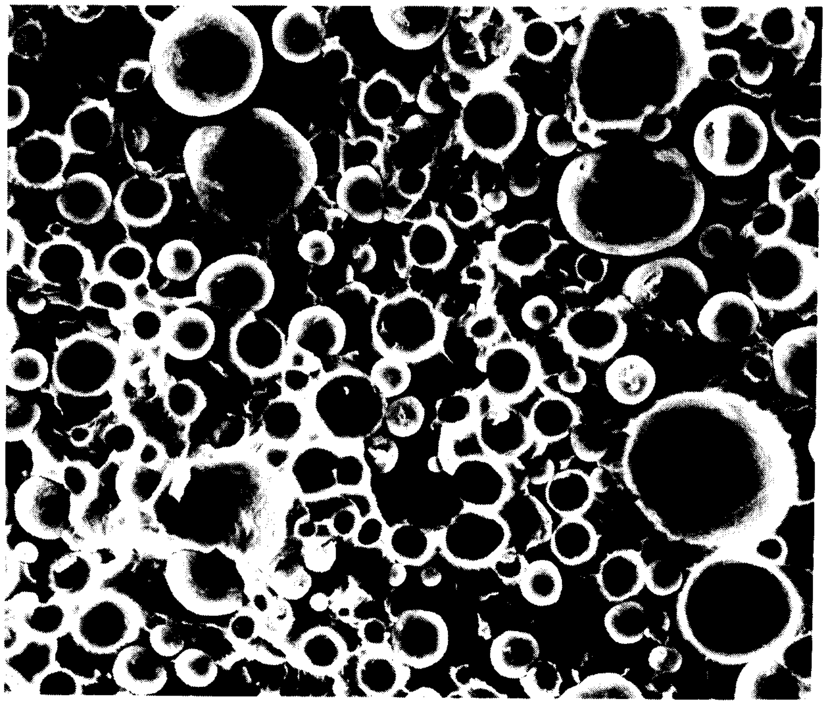

FIG. 8

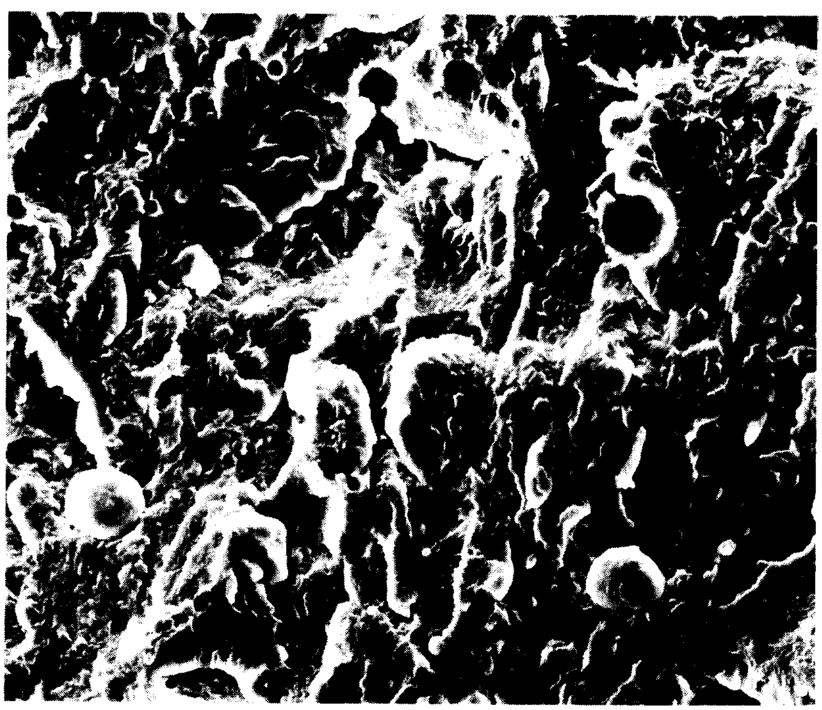

FIG. 9

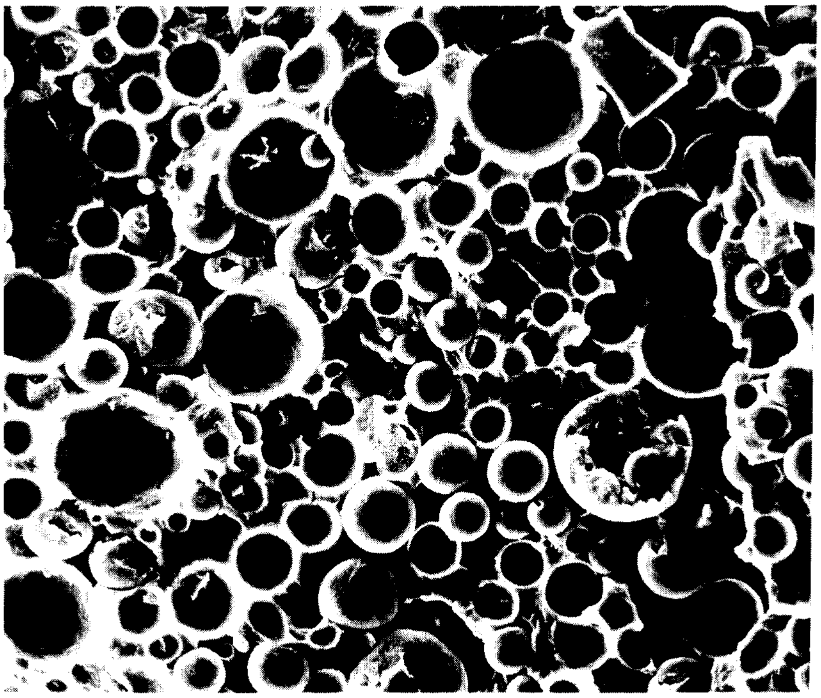

FIG. 10